# EUROPÄISCHE PATENTSCHRIFT

(11) **EP 0 670 058 B1**
(45) Veröffentlichungstag und Bekanntmachung des Hinweises auf die Patenterteilung: **08.07.1998**
(21) Anmeldenummer: 93924521.3
(22) Anmeldetag: 15.11.1993
(51) Int. Cl.: G05D 5/03

(54) **VERFAHREN ZUR STELLGLIEDIDENTIFIZIERUNG BEI DER QUERPROFIL-REGELUNG EINER KONTINUIERLICH ERZEUGTEN MATERIALBAHN**
PROCESS FOR IDENTIFYING CONTROLLING ELEMENTS DURING THE CROSS-SECTION REGULATION OF A CONTINUOUSLY PRODUCED WEB OF MATERIAL
PROCEDE D'IDENTIFICATION D'UN ORGANE DE REGLAGE LORS DE LA REGULATION DE LA SECTION TRANSVERSALE D'UNE BANDE DE MATERIAU PRODUITE EN CONTINU

(30) Priorität: 23.11.1992 DE 4239270
(43) Veröffentlichungstag der Anmeldung: 06.09.1995
(73) Patentinhaber: SIEMENS AKTIENGESELLSCHAFT, 80333 München (DE)
(72) Erfinder: ADAMY, Jürgen, D-91338 Igensdorf (DE)
(86) Internationale Anmeldenummer: DE9301092
(87) Internationale Veröffentlichungsnummer: WO9412919

(56) Entgegenhaltungen:
- EP-A- 0 364 151
- EP-A- 0 444 801
- EP-A- 0 451 742
- US-A- 4 720 808
- SOVIET INVENTIONS ILLUSTRATED, E Sektion, Woche 8029, 27 August 1980 DERWENT PUBLIKATIONS LTD., London; & SU,A,699 525 (VIBROPRIBOR)

## Beschreibung

Verfahren und Gerät zur Stellgliedidentifizierung bei der Querprofil-Regelung einer kontinuierlich erzeugten Materialbahn

Die vorliegende Erfindung betrifft ein Verfahren und ein Gerät zur Stellgliedidentifizierung, d.h. genauer, zur örtlichen Zuordnung von Stellgliedern und ihren Wirkungen bei der Querprofil-Regelung einer kontinuierlich erzeugten Materialbahn, insbesondere einer Papier- oder Kunststoffbahn.

Bei Prozessen zur kontinuierlichen Erzeugung von Materialbahnen, beispielsweise Folien- oder Papierbahnen, bestimmen Materialprofile quer zur Bahn, wie das Dicken- oder Flächengewichtsquerprofil, die Qualität des Produktes und müssen daher sehr genau eingehalten werden. Für Stelleingriffe stehen hierbei am Prozeßanfang eine Anzahl von quer zur Materialbahn angeordneten Stellgliedern zur Verfügung, beispielsweise Spindeln, mit denen der Zufluß des Materials am Prozeßanfang mehr oder weniger freigegeben werden kann. Unter allmählicher Verfestigung durchläuft die Materialbahn den Prozeß und ihr Querprofil wird am Prozeßende örtlich diskretisiert gemessen. Zur gezielten Korrektur einer durch Messung am Prozeßende festgestellten Abweichung vom gewünschten Querprofil ist die Kenntnis erforderlich, welches Stellglied auf welche Stelle der Materialbahn am Prozeßende wirkt, d.h., welches Stellglied welche Meßdaten verursacht. Diese Zuordnung verändert sich durch die Eigenheiten des Prozesses, insbesondere durch die unbekannte Schrumpfung des Materials.

Aus der US-A-4 720 808 sind ein Verfahren und eine zugehörige Anordnung zur Bestimmung der Eigenschaften von Materialbahnen bekannt, bei dem ein Meßsystem mit in Querrichtung der Bahn verteilten Strahlungsquellen unterunterhalb der Bahn und entsprechenden Detektoren oberhalb der Bahn sowie weiteren Sensoren gearbeitet wird, um jeweils ein spezifisches Flächengewicht zu bestimmen. Es lassen sich somit unter anderm auch die kompletten Querprofile der Bahnen ermitteln. In jedem Fall ist aber ein beachtlicher meßtechnischer Aufwand erforderlich. Sind jedoch bereits Stellglieder zur Querprofilbeeinflussung vorhanden, ist dies überflüssig.

Speziell für die Bestimmung der örtlichen Zuordnung zwischen Stellglied und Meßort - auch Mapping genannt - sind zwei Verfahren üblich: Das eine besteht im Aufbringen von Farbmarkierungen auf das Material am Stellgliedort und das zweite, mit "Bump-Test" charakterisierte Verfahren darin, ein Stellglied so stark auszulenken, daß am Bahnende eine signifikante Querprofilsänderung meßbar wird. Registriert man die Wirkung am Bahnende und setzt ihre Position zum Ort der Ursache am Bahnanfang in Relation, so ergibt sich die gesuchte Zuordnung. Beide verfahren weisen den Nachteil auf, daß sie aie materialbahn teilweise unbrauchbar machen oder zumindest ihre Eigenschaft durch die vorgenommene Verfärbung bzw. durch die Änderung des Gewichts bzw. der Dicke verschlechtern.

Aufgabe der Erfindung ist es daher, ein Verfahren und ein Gerät der eingangs genannten Art anzugeben, welche diese Nachteile nicht aufweisen.

Diese Aufgabe wird erfindungsgemäß mit den im Patentanspruch 1 bzw. 8 angegebenen Merkmalen gelöst.

Mit dem erfindungsgemäßen Verfahren ergibt sich der Vorteil, daß auf dem Material keine erkennbaren Spuren hinterlassen werden und trotzdem eine zuverlässige Identifizierung der Stellglieder ermöglicht wird. Die Erfindung samt ihren weiteren Ausgestaltungen, welche in Unteransprüchen gekennzeichnet sind, soll nachstehend anhand der Figuren näher veranschaulicht werden. Dabei zeigen.
- Figur 1: ein allgemeines Blockschaltbild für ein zur Durchführung des erfindungsgemäßen Verfahrens geeignetes Prozeßrechnersystem,
- Figur 2: schematisch den Herstellungsprozeß für eine Papierbahn,
- Figur 3: einen angenommenen Verlauf von innerhalb des Rauschpegels verlaufenden Querprofiländerungen als Folge entsprechender Stellgliedbetätigung,
- Figuren 4 bis 6: Überlagerungsdiagramme für verschiedene Iterationsstufen unter Zugrundelegung von Stellgrößenveränderungen (Minibumps) entsprechend Figur 3,
- Figur 7: einen aus einer Anzahl von aufeinanderfolgenden Messungen bei einer Papiermaschine bestimmten Mittelwert des Querprofils,
- Figuren 8 bis 11: mit dem erfindungsgemäßen Verfahren erhaltene Überlagerungsdiagramme für verschiedene Iterationsstufen bei Auslenkung von drei Stellgliedern,
- Figur 12: eine für ein zu identifizierendes Stellglied typische Meßsignalform samt seiner Kenngrößen,
- Figur 13: eine entsprechende, in der Praxis beobachtbare Meßsignalform,
- Figur 14: den prinzipiellen Aufbau einer hierarchisch gestuften Fuzzy-Logik-Regelwerkes und
- Figur 15: ein Interpolationsdiagramm für die Zuordnung von nicht direkt identifizierten Stellgliedern zu entsprechenden Meßzonen.

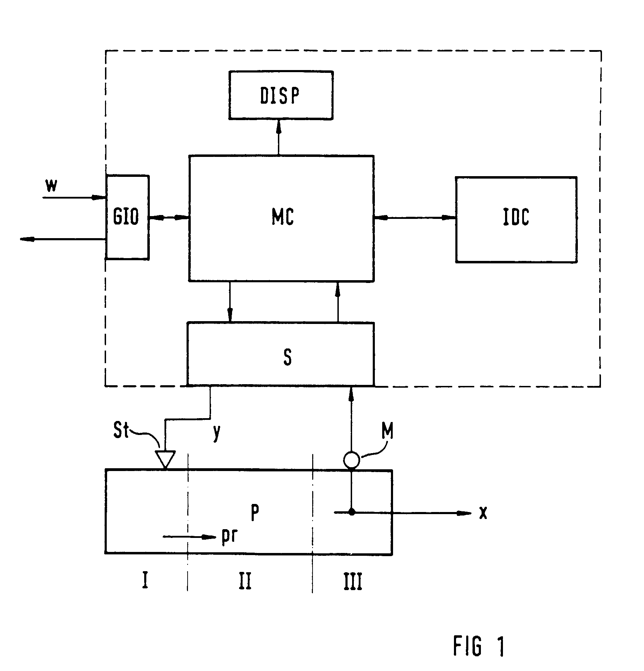

Figur 1 zeigt ein zur Durchführung des erfindungsgemäßen Verfahrens geeignetes Prozeßrechnersystem. In dem mit MC bezeichneten Hauptcontroller befindet sich ein speicherprogrammierbarer Digitalrechner mit Zentraleinheit, Arbeits-, Programm- und Datenspeichern. Über eine mit GIO bezeichnete allgemeine Ein/Ausgabe-Schnittstelle kann der Hauptcontroller MC mit der Außenwelt verkehren, insbesondere wird ihm über diese Schnittstelle der Sollwert w für die Regelgröße x des Prozesses P zugeführt. Üblicherweise ist auch noch eine mit DISP bezeichnete Monitoreinrichtung zur Visualisierung interessierender Daten vorgesehen. Zwischen dem Hauptcontroller MC und dem Prozeß P ist ein mit S bezeichneter Schnittstellenblock vorgesehen, über welchen dem Hauptcontroller von dem mit M bezeichneten Regelgrößenaufnehmer die Regelgröße x zugeführt wird und über welche der Hauptcontroller nach durchgeführtem Vergleich mit dem Sollwert w eine mit y bezeichnete Korrektur- bzw. Stellgröße an das Stellglied St abgibt. Im Schnittstellenblock S befinden sich in aller Regel Analog/Digital-Wandler und meist auch Digital/Analog-Wandler, sowie Register zur Speicherung aktueller Daten und vom Hauptcontroller MC betätigbare Abtast- und Halteglieder. Die Hardwarekomponenten und die Arbeitsweise eines derartigen auch als DDC (Direct Digital Control)-Regler bezeichneten Prozeßrechnersystems gehören zum Stand der Technik und sind beispielsweise auch in dem europäischen Patent 0 364 151 A2 beschrieben.

An das bisher beschriebene bekannte Prozeßrechnersystem ist zur Durchführung des erfindungsgemäßen Verfahrens der mit IDC bezeichnete Identifikations-Controller angekoppelt. Der Identifikationscontroller kann entweder aus einem separaten Rechnersystem bestehen, welches von dem Hauptcontroller gelieferte Daten entgegennimmt, diese verarbeitet und die Ergebnisse dann dem Hauptcontroller wieder zurückreicht oder es kann sich dabei um ein Softwareprogramm handeln, welches auf dem Digitalrechner des Hauptcontrollers MC läuft. In diesem Falle können bereits vorhandene Prozeßrechnersysteme nach dem erfindungsgemäßen Verfahren arbeiten, ohne daß eine Hardwareaufrüstung erforderlich wird.

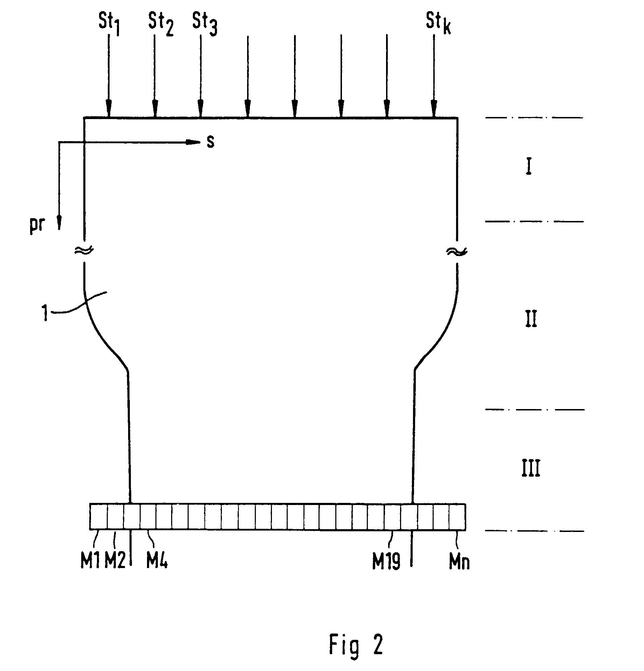

Figur 2 zeigt schematisch den Herstellungsprozeß für eine Papierbahn. Am Prozeßbeginn, welcher mit I bezeichnet ist, sind quer zur Bahn in der mit s bezeichneten Koordinatenrichtung eine Vielzahl von Stellgliedern in Form von den Materialzufluß mehr oder weniger freigebenden Spindeln angeordnet, von denen nur ein Bruchteil, nämlich die mit St₁ bis Stₖ bezeichnet sind, für die Identifizierung herangezogen werden sollen. Die Zahl der insgesamt vorhandenen Stellglieder kann beispielsweise 10mal größer sein als die Zahl der Stellglieder St₁ bis Stₖ. Die Stellglieder St₁ bis Stₖ seien äquidistant über die gesamte Breite der Materialbahn 1 angeordnet. Der eigentliche Papierherstellungsprozeß, welcher sich in Richtung des mit pr bezeichneten Pfeiles bewegt, findet in dem mit II bezeichneten Abschnitt statt. Hier erfolgt die Verfestigung unter gleichzeitiger Volumensverminderung, d.h. Schrumpfung der am Prozeßbeginn eingebrachten Wasserzellstoff-Suspension, bis dann an dem mit III bezeichneten Prozeßende das Endprodukt in Form einer Papierbahn entsteht, deren Flächengewichts- bzw. Dickenprofil in n bezeichneten Meßzonen M1 bis Mn praktisch lückenlos erfaßt wird. Üblich sind Papierbahnbreiten zwischen 3 und 9 m, wobei die einzelne Meßzone einen Bereich von ungefähr 1 bis 10 cm überdeckt. Da das Ausmaß der Schrumpfung von den Eigenheiten des Prozesses, der Konsistenz der Suspension und der verwendeten Holzsorte abhängt, kann nicht vorhergesagt werden, welche Stellgliedauslenkung in welcher der Meßzonen zur Auswirkung kommt, so daß eine in einer Meßzone festgestellte Abweichung der Regelgröße x, welche den an diesem Ort vorhandenen Flächengewichts bzw. Materialdicke entspricht, nicht gezielt korrigiert werden könnte.

Zugrundegelegt für das erfindungsgemäße Verfahren ist ein stationärer Prozeßzustand, bei welchem das System keinen Stellgrößenänderungen, d.h. keinen Reglereingriffen, unterliegt. Es wurde nun erkannt, daß für diesen Fall die in jeder Meßzone zeitlich aufeinanderfolgenden Meßwerte sich zusammensetzen aus einem konstanten, von der Zahl der beobachteten Meßwerte unabhängigen Anteil und einem stochastischem Stör- und Meßfehleranteil, wobei dieser stochastische Anteil - das Rauschen - normalverteilt ist und den Mittelwert Null aufweist. Wenn daher - wie im ersten erfindungsgemäßen Verfahrensschritt - in jeder Meßzone mit einer Anzahl von i₁ Messungen der zeitliche Mittelwert der Regelgröße x bestimmt und abgespeichert wird und dann bei nachfolgenden i₂ Messungen jeweils dieser Mittelwert von den Meßergebnissen subtrahiert wird, dann läßt sich der stochastische Störanteil separieren.

Nach erfolgter Mittelwertbildung werden die Stellglieder St₁ bis Stₖ so verstellt, daß am Prozeßende eine kleine lokale Profiländerung entsprechend einer Meßsignaländerung von α σ auftritt, wo σ die Standardabweichung der stochastischen Störung bedeutet. Damit solche Verstellungen, im folgenden mit "Minibumps" bezeichnet, im Rauschen untergehen, sie also das Profil nicht verschlechtern, sollte der Faktor α ungefähr gleich Eins gewählt werden, wobei sich dieser Wert für eine rasche Erkennung als vorteilhaft erwiesen hat. In den nächsten Verfahrensschritten werden Querprofile, von denen der im vorangegangenen Verfahrensschritt ermittelte Mittelwert jeweils subtrahiert wurde, additiv überlagert. Mit zunehmender Zahl solcher Überlagerungen setzen sich die Minibumps gegenüber den summierten Rauschwerten durch, weil sie sich stets mit konstanter Größe am selben Ort auswirken, bis sie schließlich eindeutig als solche erkennbar und damit die sie verursachenden Stellglieder identifiziert sind.

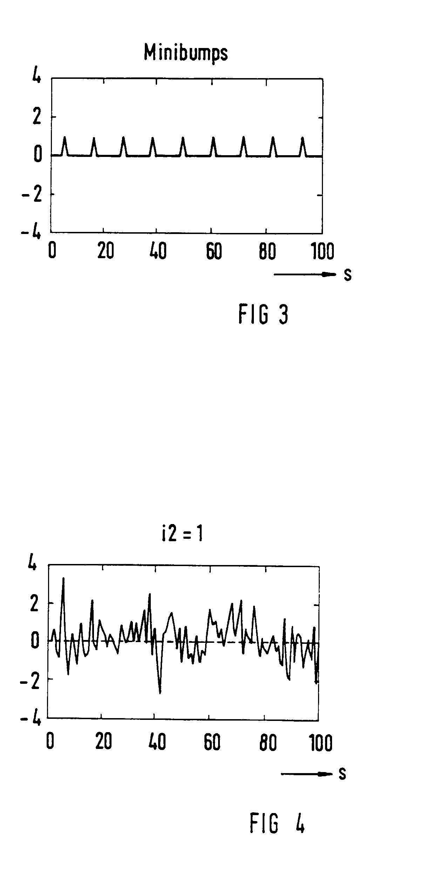

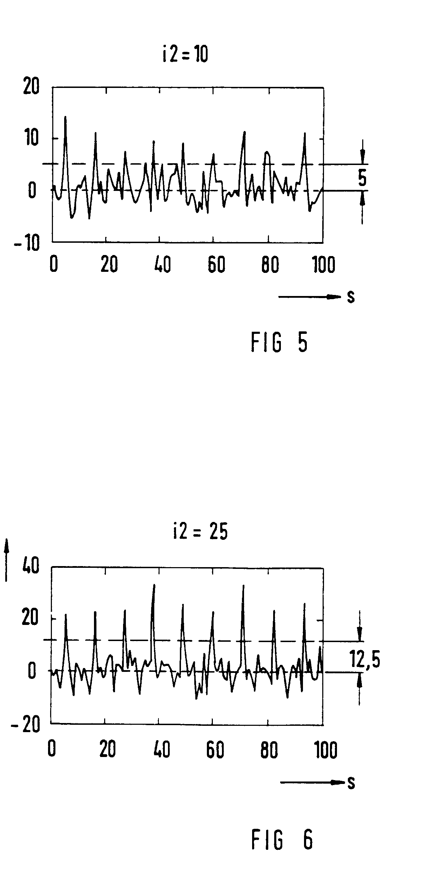

Mit den Figuren 3 bis 6 soll beispielhaft anhand einer Simulation aufgezeigt werden, wie sich bei Anwendung des erfindungsgemäßen Verfahrens auf Dauer die determinierte Störung in Form der Minibumps gegenüber der regellosen, undeterminierten Störung in Form des stochchastischen Prozessenrauschens durchsetzt. In Abzissenrichtung der Diagramme sind jeweils die Ortskoordinaten der Meßzonen und in Ordinatenrichtung Werte für die gemessenen Signale eingetragen. Neun von beispielsweise 100 Stellorganen, welche über die Breite der Materialbahn verteilt angeordnet sind, sollen jeweils so verstellt sein, daß sich am Prozeßende die in Figur 3 dargestellte Form der Meßsignale ergibt. Für das Prozeßrauschen sei eine Standardabweichung von σ = 1 und der Mittelwert Null vorausgesetzt. Der zeitliche Mittelwert des Querprofils soll in dieser Simulation der Einfachheit halber über die ganze Breite den Wert Null besitzen. Ein einzelnes Querprofil, wie in Figur 4, setzt sich dann additiv aus den Auswirkungen der Minibumps und dem Rauschen zusammen. Dabei gehen die durch die Minibumps verursachten Meßsignale völlig im Prozeßrauschen unter. Überlagert man dann mehrere aufeinanderfolgende Querprofile, die sich aus den Minibumpsauswirkungen und dem Rauschen zusammensetzen, beispielsweise 10mal, so ergibt sich nach diesen i2 = 10 Überlagerungen das Querprofil entsprechend Figur 5. Man erkennt, daß die summierten Auswirkungen der Minibumps-die determinierte Störung - sich schon merklich gegenüber dem undeterminierten Summenprozeßrauschen durchzusetzen beginnen und nach beispielsweise 25 solcher Überlagerungen ergibt sich für die Meßsignale der in Figur 6 dargestellte Verlauf, dessen Analyse bereits schon eine sehr sichere Identifikation für den Verursachungsort der Minibumps, d.h. den jeweiligen Wirkungsort des Stellgliedes zuläßt. Grundsätzlich wird eine derartige Analyse mit jeder weiteren Überlagerung sicherer, d.h. die von den Minibumps verursachten Signale heben sich immer deutlicher von dem Summenrauschen ab, je größer die Zahl i2 der Überlagerungen ist.

Man wird bestrebt sein, die Zahl der vorzunehmenden Überlagerungen i2 nur so groß zu wählen, bis eine sichere Identifizierung der Stellglieder möglich wird, weil das erfindungsgemäße Verfahren nur in solchen Zeiträumen durchgeführt werden kann, in welchen keine korrigierenden Reglereingriffe des Prozeßrechners erforderlich werden und sonst abgebrochen werden muß. Wertet man zur Identifikation die Amplituden der Meßsignale im Vergleich mit einer Erkennungsschwelle aus, dann hat es sich als zweckmäßig erwiesen, diese Erkennungsschwelle gleich dem halben Produkt aus der Anzahl i2 der Überlagerungen und der Amplitude der durch die Stellgliedverstellung bewirkten Profiländerungen zu wählen. Die Aufsummation, d.h. die fortlaufende Überlagerung der Meßsignale wird dann abgebrochen, wenn eine der Anzahl der Minibumps verursachenden Stellgliedern entsprechende Anzahl von Meßsignalen bezüglich ihrer Amplitude diese Erkennungsschwelle übersteigt, wobei zusätzlich noch eine Plausibilitätsprüfung erfolgen muß, ob dieses Übersteigen auch an dem erwarteten Ort erfolgt. Dieser erwartete Ort kann unter Zugrundelegung empirisch ermittelter Schrumpfungskurven mit einiger Sicherheit bestimmt werden. Mit diesen Kriterien ergäbe sich bei den dargestellten Beispielen die in den Figuren 5 und 6 eingezeichneten Erkennungsschwellen von 5 bzw. 12,5.

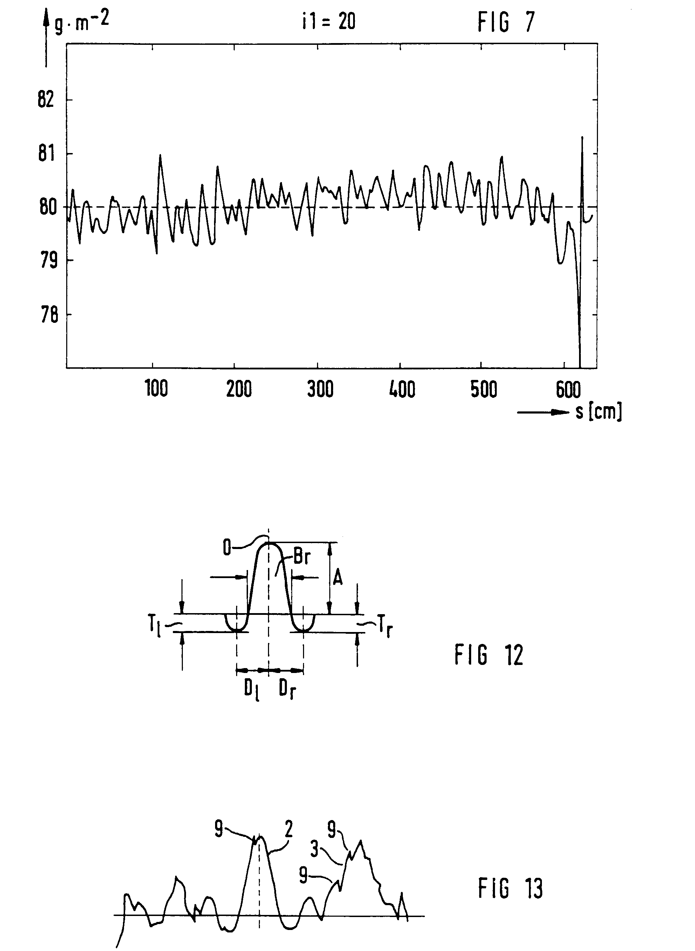

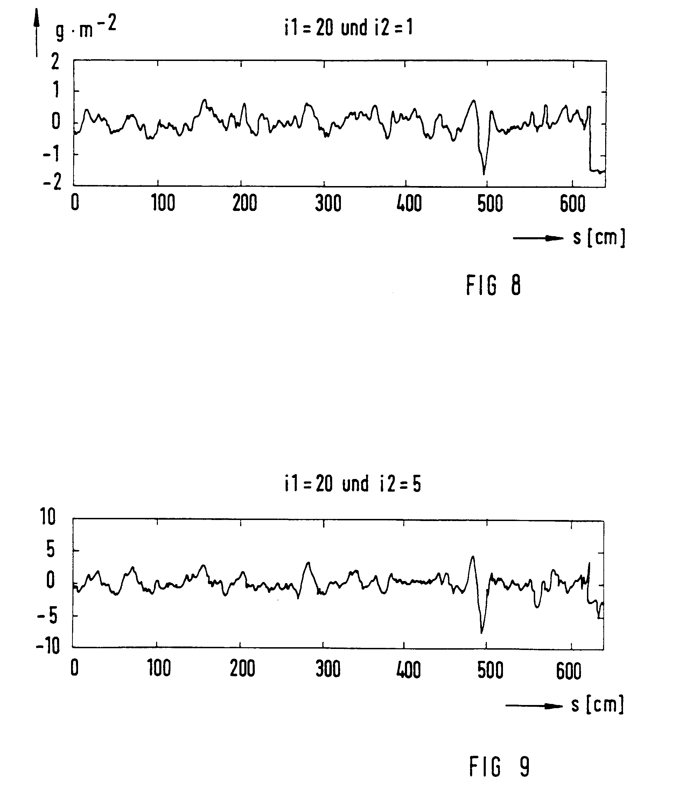

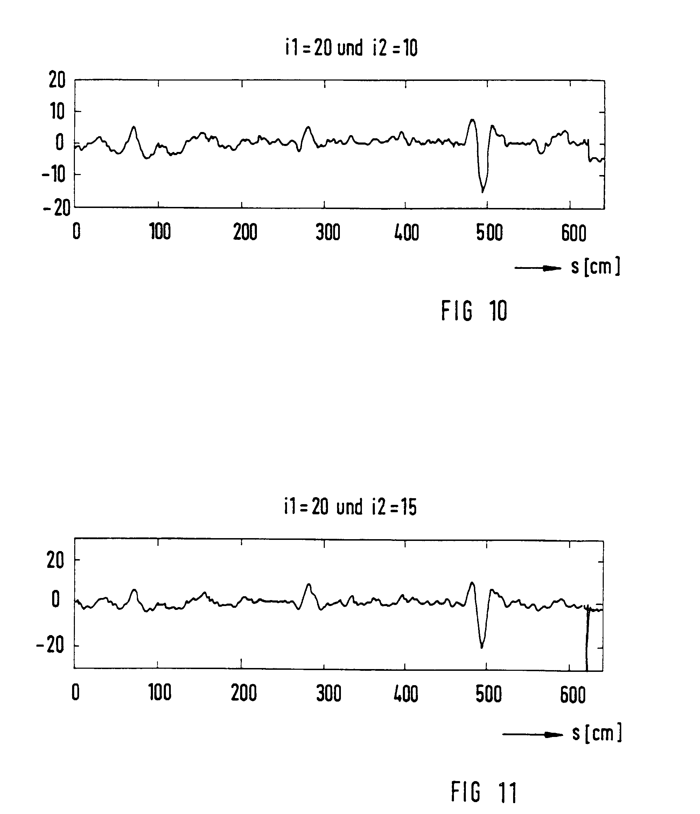

In den Figuren 7 bis 11 sind die Ergebnisse von Flächengewichts-Querprofilmessungen bei einer Papiermaschine dargestellt. Figur 7 zeigt den aus i1 = 20 zeitlich aufeinanderfolgenden Messungen bestimmten Mittelwert des Querprofils bei einer Papierbahnbreite von 6,4 m, welcher in jeder Meßzone zeitlich konstant ist, jedoch örtlich um einen Wert von 80 g pro qm herum schwankt. Entsprechend dem erfindungsgemäßen Identifizierungsverfahren wurde dieser Mittelwert von den im folgenden gemessenen Querprofilen subtrahiert und die dabei erhaltenen Ergebnisse jedesmal aufsummiert, d.h. überlagert. Die Figuren 9 bis 11 zeigen jeweils die Endergebnisse nach i₂ = 5, i₂ = 10 und i₂ = 15 Überlagerungen. Der Übersichtlichkeit halber wurden nur drei Stellglieder mit Minibumps gleicher Amplitude betätigt, wobei die Richtung eines Minibumps von der der beiden anderen verschieden war. Aus den gemessenen Verläufen gemäß den Figuren 8 bis 11 wird derselbe Effekt wie bei den Figuren 4 bis 6 deutlich, nämlich, daß das Verhältnis der durch die Minibumps verursachten Meßsignalamplituden zu den Amplituden der stochastischen Rauschsignale mit wachsender Anzahl von Überlagerungen größer wird, so daß die Stellglieder in der bereits beschriebenen Weise identifiziert werden können. Sie liegen in diesem Fall bei 72 cm, 283 cm und 493 cm.

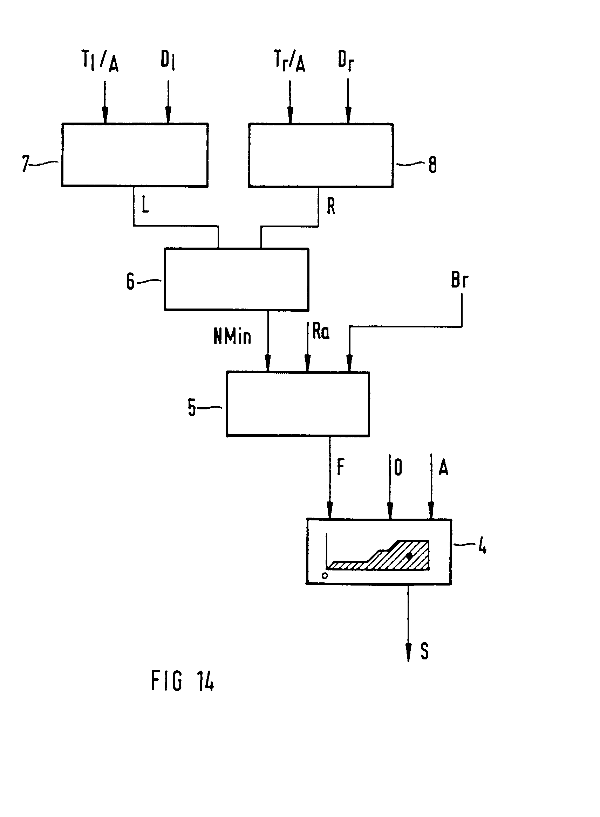

Anstatt die Amplituden der Meßsignale durch Vergleich mit einer Erkennungsschwelle auszuwerten, erweist es sich oft aufgrund des nicht idealen Verhaltens der Papiermaschine und ihrer Stellglieder als zweckmäßig, die Meßsignale anhand typischer Signalmuster mittels einer Mustererkennung auszuwerten. Ein typisches Signalmuster für die Auswirkung eines Minibumps zeigt Figur 12. Dieses Signalmuster weist ein Maximum mit dem Amplitudenbetrag A und der Basisbreite Br auf sowie Nebenminima beidseits des Maximums im Abstand D₁ bzw. Dᵣ, wobei diese Nebenminima die Tiefe T₁ und Tᵣ aufweisen. Beim Muster nach Figur 12 ist T₁ = Tᵣ und D₁ = Dᵣ. Es hat sich nun für die Stellgliedidentifizierung als erfolgreich erwiesen, bei den nach den einzelnen Überlagerungen erhaltenen Signalformen nach Mustern entsprechend der Figur 12 zu suchen, wobei die Kenngrößen D₁,Dᵣ und Br sich direkt wiederfanden, während sich beim Verhältnis der Beträge von Hauptmaximum zu Nebenminima ein konstantes Verhältnis eingestellt hat.

Figur 13 zeigt ein Beispiel für die durch einen Minibump tatsächlich erzeugte Signalform 2, welche deutlich erkennbar die typische Gestalt entsprechend der Figur 12 aufweist und sich dadurch bei ungefähr gleicher Amplitude signifikant von einer durch eine sonstige Störung hervorgerufenen Signalform 3 unterscheidet. Wendet man die bekannten klassischen Verfahren der Mustererkennung an, wie sie beispielsweise in dem Buch von Gonzales und Thomason "Syntactic Pattern Recognition", insbesondere Kapitel 4.3 "Automata for simple Syntax-directed Translation", Seiten 116 bis 125, erschienen 1978 im Verlag Edison-Wessly, oder auch die in neuerer Zeit bekanntgewordenen Methoden der Mustererkennung mittels neuronaler Netze, beschrieben in dem Aufsatz von Kreßel, Schürmann und Franke: "Neuronale Netze für die Musterklassifikation", in "Mustererkennung 1991", 13. DAGM-Symposium, München, Oktober 1991, erschienen im Springer-Verlag 1991, Seiten 1 bis 19, dann läßt sich die Anzahl der zu einer Identifizierung benötigten Überlagerungen gegenüber der zuvor beschriebenen Auswertung durch Vergleich mit einer Erkennungsschwelle drastisch vermindern, ohne etwas in bezug auf die Sicherheit derselben einzubüßen.

Derselbe Vorteil ergibt sich bei Mustererkennung unter Verwendung der etwas einfacher handzuhabenden Anwendung der bekannten Fuzzy-Logik, wie sie beispielsweise, insbesondere in bezug auf ihre Implementierung in dem Aufsatz von Preuß: Fuzzy-Control - werkzeugunterstützte Funktions-Realisierung für Automatisierungsgeräte und Prozeßleitsysteme" in "Automatisierungstechnische Praxis 34" (1992) 8, Seiten 451 bis 460, beschrieben ist.

Figur 14 zeigt ein Blockdiagramm für ein für die Zwecke der Erfindung geeignetes mehrstufiges Fuzzy-Logik-Regelwerk. Seiner letzten, mit 4 bezeichneten Stufe werden Amplitude A der Meßsignale, ihr Erfassungsort O am Prozeßende und eine die Form der Meßsignale charakterisierende Größe F als Eingangsvariable zugeführt. Die Eingangsvariablen F, O, A werden in bekannter Weise über entsprechende Zugehörigkeitsfunktionen in Wahrheitswerte umgesetzt, welche aussagen, zu welchem Grad der jeweilige Wert der Eingangsgröße zu durch die Zugehörigkeitsfunktionen definierten linguistischen Werten gehört. Nach diesem, mit Fuzzyfizierung bezeichneten Schritt werden die für die einzelnen Regeln relevanten Wahrheitswerte nach Maßgabe von UND/ODER-Verknüpfungen einer Min- bzw. Max-Operation unterworfen, woraus der jeweilige Wahrheitswert für den kompletten Wenn-Teil einer jeden Regel folgt. Beispiele für derartige Regeln sind: "Wenn die Amplitude groß und der Ort wie erwartet und die Form gut ist, dann ist das untersuchte Meßsignal mit großer Sicherheit auf einen Minibump zurückzuführen" oder "wenn die Amplitude groß ist und der Ort unerwartet und die Form mäßig ist, dann ist es nicht sehr wahrscheinlich, daß das untersuchte Meßsignal auf einen Minibump zurückzuführen ist". Mittels der sogenannten Inferenz wird der komplette Wenn-Teil einer jeden Regel, mit dem Dann-Teil verknüpft und schließlich abschließend mit einem mit Defuzzyfizierung bezeichneten Schritt etwa nach der Schwerpunktmethode, wie in dem mit 4 bezeichneten Block dargestellt, in einen konkreten, zwischen Null und Eins liegenden Zahlenwert rückübersetzt, welcher die Ausgangsvariable S des Fuzzy-Regelwerks bildet. Je näher dieser Wert an Eins liegt, desto wahrscheinlicher ist es, daß das untersuchte Meßsignal auf einen Minibump zurückzuführen ist. Der Wert der Eingangsvariablen F - für die Form - wird in einer der letzten Stufe 4 übergeordneten Stufe 5 entsprechend der aus den Eingangsvariablen Br, Ra und NMin erarbeitet, wobei Br die Breite des Meßsignals (vergl.Figur 12) und Ra eine für die Rauhigkeit des Signalverlaufs charakteristische Größe ist. Ein Vergleich der beiden in Figur 13 dargestellten Signalformen macht deutlich, daß der mit 2 bezeichnete Signalverlauf weniger rauh als bei der mit 3 bezeichneten Signalform. Als Maß für die Rauhigkeit Ra könnte z.B. die Anzahl der in der Figur 13 mit 9 bezeichneten Nebenmaxima verwendet werden. Die mit NMin bezeichnete Eingangsvariable des Fuzzy-Blocks 5, welche gewissermaßen für die Form von festgestellten Nebenminima charakteristisch ist, wird wiederum in einem diesem übergeordneten Block 6 entsprechend erarbeitet. Der Wahrheitswert dieser Variablen wird dann besonders groß, wenn bezüglich des linken Nebenmaximums und des rechten Nebenmaximums eine gute Form vorgefunden werden. Die Form der Nebenminima wird jeweils in den Blöcken 7 und 8 bestimmt. Die Eingangsvariablen dieser Blöcke 7 bzw. 8 bestehen jeweils im Abstand D₁ und Dᵣ der beiden Minima von der Symmetrieachse (vergl. Figur 12) sowie im Verhältnis der linken bzw. der rechten Nebenminimumamplitude zur Hauptamplitude A des Meßsignals. Ausgangsvariable sind die linke und die rechte Nebenminimumform L und R.

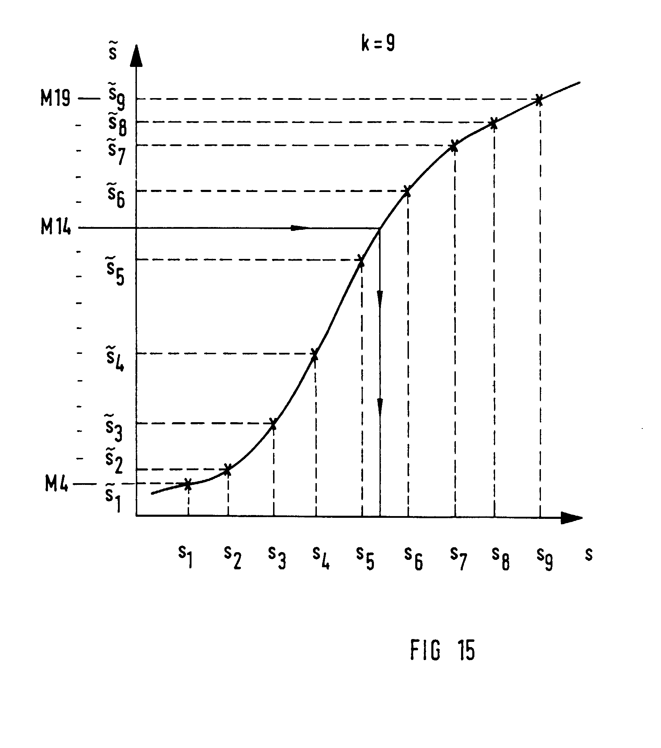

Figur 15 zeigt die Ergebnisse des erfindungsgemäßen Identifikationsverfahrens in einem Diagramm. Für k = 9 Stellglieder mit den Koordinaten s1 bis s9 in der Koordinatenrichtung quer zur Bahn sind die zugehörigen Koordinaten s₁ bis s₉ derjenigen Orte am Prozeßende ermittelt, an denen sich ihre Verstellungen bemerkbar machen. Diese Zuordnungen sind in das Diagramm der Figur 15 eingetragen und ergeben 9 mit einem Kreuz gekennzeichnete Punkte. Werden diese Punkte als Stützstellen für eine geeignete Interpolationsfunktion benutzt, dann lassen sich auch die übrigen, nicht explizit identifizierten Stellglieder mit den Zwischenwerten dieser Interpolationsfunktion den Orten ihrer jeweiligen Auswirkung zuordnen. Es wird damit möglich, für jede Meßzone am Prozeßende genau das Stellglied zu bestimmen, welches betätigt werden muß, um in dieser Meßzone eine Veränderung des Querprofils zu bewerkstelligen. Nimmt man beispielsweise an, daß das Stellglied St1 mit der Koordinate s1 von der Meßzone M4 (vergl. Figur 2) und das Stellglied St9 mit der Koordinate in Bahnquerrichtung s9 von dem Meßglied M19 identifiziert wurde und soll in der Meßzone M14 eine Querprofiländerung bewirkt werden, so wäre ein Stellglied zu betätigen, dessen s-Koordinate in Bahnquerrichtung zwischen derjenigen des Stellgliedes St5 und St6 liegt und deren genauer Wert sich aus der Umkehrfunktion der in Figur 15 dargestellten Interpolationsfunktion ergibt.

## Patentansprüche

1. Verfahren zur Stellgliedidentifizierung bei der Querprofil-Regelung einer kontinuierlich erzeugten Materialbahn (1), insbesondere einer Papier- oder Kunststoffbahn, wobei mehrere Stellglieder (St₁ ... Stₖ) und mehrere Meßzonen (M₁, ... Mₙ) quer zur Materialbahn vorhanden sind und wobei der Zusammenhang der Einwirkung an einem Stellglied (St₁ ... Stₖ) mit der Änderung von Meßsignalen in den Meßzonen (M₁, ... Mₙ) erfaßt wird, **gekennzeichnet** durch folgende Verfahrensschritten:
a) bei konstant belassenen Stellgrößen (St₁ ... Stₖ) wird in jeder Meßzone (M₁, ... Mₙ) aus einer ersten Anzahl (i1) von aufeinanderfolgenden Messungen der zeitliche Mittelwert des Profils am Bahnende bestimmt und gespeichert,
b) eine bestimmte, zweite Anzahl (k) von zu identifizierenden Stellgliedern (St₁, ... Stₖ) wird um gleiche Beträge verstellt, welche sich am Bahnende nur innerhalb des Rauschpegels des Querprofils auswirken,
c) es wird in jeder meßzone eine Profilmessung vorgenommen und von deren Ergebnis der beim Schritt a) erhaltene zeitliche Mittelwert subtrahiert,
d) Schritt c) wird unter Überlagerung der dabei erhaltenen Ergebnisse so oft wiederholt, bis sich die den zu identifizierenden Stellgliedern (St₁, ... Stₖ) entsprechende Anzahl (k) von Meßsignalen nach Amplitude und/oder Form von den überlagerten Rauschanteilen des Querprofils deutlich erkennbar abhebt.

2. Verfahren nach Anspruch 1, **dadurch gekennzeichnet,** daß die Amplituden der Meßsignale durch Vergleich mit einer Erkennungsschwelle ausgewertet werden, welche von der Anzahl (i₂) der Überlagerungen und der Amplitude der durch die Stellgliedverstellungen bewirkten Profiländerung abhängig ist.

3. Verfahren nach Anspruch 1, **dadurch gekennzeichnet,** daß die Meßsignale anhand typischer Signalmuster mittels einer Mustererkennung ausgewertet werden.

4. Verfahren nach Anspruch 3, **dadurch gekennzeichnet,** daß die Mustererkennung mittels eines hierarchisch gestuften Fuzzy-Logik-Regelwerkes (4-8) durchgeführt wird, wobei die Eingangsvariablen der letzten Stufe die Amplitude (A), die Form (F) und der Erwartungsort (O) der Meßsignale sind, und die Ausgangsvariable die Erkennungssicherheit (S) für die durch die Stellgliedverstellungen bewirkten Profiländerungen ist und wobei die Form der Meßsignale in übergeordneten Stufen bewertet wird, welchen als Eingangsvariablen die Rauhigkeit (Ra) und die Breite (Br) der Meßsignale sowie jeweils der Abstand und die auf die Amplitude bezogene Tiefe der rechten bzw. der linken Nebenmaxima zugeführt werden.

5. Verfahren nach einem der vorhergehenden Ansprüche, **dadurch gekennzeichnet,** daß die Stellglieder jeweils um einen solchen Betrag verstellt werden, daß die dadurch bewirkte Profiländerung der Standardabweichung des verrauschten Querprofils entspricht.

6. Verfahren nach einem der, vorhergehenden Ansprüche, **dadurch gekennzeichnet,** daß die Verstellung bei äquidistant über die gesamte Breite der Materialbahn (1) verteilten Stellgliedern vorgenommen wird.

7. Verfahren nach einem der vorhergehenden Ansprüche, **dadurch gekennzeichnet,** daß die Zuordnung der übrigen Stellglieder zu entsprechenden Meßzonen am Bahnende mittels einer Interpolationsfunktion erfolgt, welche die Werte der bestimmten Anzahl (k) der identifizierten Stellglieder als Stützstellen enthält.

8. Gerät zur Stellgliedidentifizierung bei der Querprofil-Regelung einer kontinuierlich erzeugten Materialbahn (1), insbesondere einer Papier- oder Kunststoffbahn, wobei mehrere Stellglieder (St₁, ... Stₖ) und mehrere Meßzonen (M₁, ... Mₙ) quer zur Materialbahn (1) vorhanden sind, und wobei der Zusammenhang der Einwirkung an einem Stellglied (St₁ ... Stₖ) mit der Änderung von Meßsignalen in den Meßzonen (M₁, ... Mₙ) erfaßt wird, wozu das Gerät wenigstens aus einem speicherprogrammierbaren Digitalrechner (MC) mit Zentraleinheit, Arbeits-, Programm- und Datenspeichern sowie einer Ein/Ausgabe-Schnittstelle besteht und für die Ausführung des Verfahrens nach Anspruch 1 entsprechend programmiert ist, **gekennzeichnet** durch
a) Mittel zur Bestimmung und Speicherung eines zeitlichen Mittelwertes des Profils am Bahnende für jede meßzone aus einer ersten Anzahl (i₁) von aufeinanderfolcenden Messungen bei konstant belassenen Stellgrößen;
b) Mittel zur Verstellung einer bestimmten zweiten Anzahl (k) von zu identifizierenden Stellgliedern (St₁, ... Stₖ) um gleiche Beträge, welche sich am Bahnende nur innerhalb des Rauschpegels des Querprofils auswirken;
c) Mittel zur Durchführung einer iterativen Profilmessung in jeder meßzone, wobei von dem meßergebnis der bei a) erhaltene zeitliche mittelwert Subtrahiert wird;
d) Mittel zur Überlagerung der bei c) erhaltenen Ergebnisse und zum Abbruch der Iteration, wenn sich die den zu identifizierenden Stellgiedern (St₁, ... Stₖ) entsprechende zweite Anzahl (k) von Meßsignalen nach Amplitude und/oder Form von den überlagerten Rauschanteilen des Querprofils deutlich erkennbar abhebt.

9. Gerät nach Anspruch 8, **gekennzeichnet** durch weitere Mittel zur Auswertung der Amplituden der Meßsignale durch Vergleich mit einer Erkennungsschwelle, welche von der Anzahl (i₂) der Überlagerungen gemäß den Merkmalen c) und d)und der Amplitude der durch die Stellgliedverstellungen bewirkten Profiländerung abhängig ist.

10. Gerät nach Anspruch 8, **gekennzeichnet** durch weitere Mittel zu Auswertung der Meßsignale anhand typischer Signalmuster mittels Mustererkennung.

11. Gerät nach Anspruch 10, **gekennzeichnet** durch weitere Mittel zur Durchführung der Mustererkennung unter Verwendung eines hierarchisch gestuften Fuzzy-Logik-Regelwerkes (4-8), wobei die Eingangsvariablen der letzten Stufe die Amplitude (A), die Form (F) und der Erwartungsort (O) der Meßsignale sind, und die Ausgangsvariable die Erkennungssicherheit (S) für die durch die Stellgliedverstellungen bewirkten Profiländerungen ist und wobei die Form der Meßsignale in übergeordneten Stufen bewertet wird, welchen als Eingangsvariablen die Rauhigkeit (Ra) und die Breite (Br), der Meßsignale sowie der Abstand die auf die Amplitude bezogene Tiefe der rechten bzw. der linken Nebenmaxima zugeführt werden.

12. Gerät nach Anspruch 8 oder einem der folgenden Ansprüche 9 bis 11, **gekennzeichnet** durch weitere Mittel zur Verstellung der Stellglieder (St₁, ... Stₖ) jeweils um einen solchen Betrag, daß die dadurch bewirkte Profiländerung der Standardabweichung des verrauschten Querprofils entspricht.

13. Gerät nach Anspruch 8 oder einem der folgenden Ansprüche 9 bis 12, **gekennzeichnet** durch weitere Mittel zur Verstellung von äquidistant über die gesamte Breite der Materialbahn (1) verteilten Stellgliedern (St₁, ... Stₖ).

14. Gerät nach Anspruch 8 oder einem der folgenden Ansprüche 9 bis 13, **gekennzeichnet** durch weitere Mittel zur Zuordnung der übrigen Stellglieder (St₁, ... Stₖ) zu entsprechenden Meßzonen am Bahnende unter Verwendung einer Interpolationsfunktion, welche die Werte der bestimmten Anzahl (k) der identifizierten Stellglieder als Stützstellen enthält.

## Claims

1. Method for identifying actuators when controlling the cross-section of a continuously produced material web (1), in particular a paper or plastic web, a plurality of actuators (St₁,... Stₖ) and a plurality of measuring zones (M₁, ... Mₙ) being present transverse to the material web, and the connection between the effect on an actuator (St₁,... Stₖ) and the variation in measuring signals in the measuring zones (M₁, ... Mₙ) being detected, characterized by the following method steps:
a) with the manipulated variables (St₁, ... Stₖ) left constant, the temporal mean value of the section is determined and stored at the web end in each measuring zone (M₁,... Mₙ) from a first number (i1) of successive measurements,
b) a specific, second number (k) of actuators (St₁, ... Stₖ) to be identified is adjusted by the same amounts, which have an effect at the web end only within the noise level of the cross-section,
c) a section measurement is undertaken in each measuring zone, and the temporal mean value obtained in step a) is subtracted from the result of said measurement,
d) step c) is repeated, while superimposing the results obtained in the process, until the number (k) of measuring signals corresponding to the actuators (St₁, ... Stₖ) to be identified stands out clearly from the superimposed noise components of the cross-section in terms of amplitude and/or shape.

2. Method according to Claim 1, characterized in that the amplitudes of the measuring signals are evaluated by comparison with a detection threshold which is a function of the number (i₂) of the superimpositions and the amplitude of the change in section effected by the actuator adjustments.

3. Method according to Claim 1, characterized in that the measuring signals are evaluated using typical signal patterns by means of pattern recognition.

4. Method according to Claim 3, characterized in that the pattern recognition is carried out by means of a hierarchically staged fuzzy logic controller (4-8), the input variables of the last stage being the amplitude (A), the shape (F) and the expected location (O) of the measuring signals, and the output variable being the reliability of detection (S) for the changes in section effected by the actuator adjustments, and the shape of the measuring signals being evaluated in higher-order stages which are fed, as input variables, the roughness (Ra) and the width (Br) of the measuring signals as well as, in each case, the spacing and the depth, referred to the amplitude, of the right-hand and of the left-hand secondary maxima.

5. Method according to one of the preceding claims, characterized in that the actuators are adjusted by such an amount in each case that the change in section thereby effected corresponds to the standard deviation of the noisy cross-section.

6. Method according to one of the preceding claims, characterized in that the adjustment is undertaken with the actuators distributed equidistantly over the entire width of the material web (1).

7. Method according to one of the preceding claims, characterized in that the assignment of the remaining actuators to corresponding measuring zones at the web end is performed with the aid of an interpolation function which contains as support points the values of the number (k) of the identified actuators which has been determined.

8. Device for identifying actuators when controlling the cross-section of a continuously produced material web (1), in particular a paper or plastic web, a plurality of actuators (St₁, ... Stₖ) and a plurality of measuring zones (M₁, ... Mₙ) being present transverse to the material web (1), and the connection between the effect on an actuator (St₁, ... Stₖ) and the variation in measuring signals in the measuring zones (M₁, ... Mₙ) being detected, for which purpose the device comprises at least a stored-program digital computer (MC) with a central processing unit, main, program and data memories, and an input/output interface, and is appropriately programmed for carrying out the method according to Claim 1, characterized by
a) means for determining and storing a temporal mean value of the section at the web end for each measuring zone from a first number (i₁) of successive measurements with the manipulated variables left constant;
b) means for adjusting a specific second number (k) of actuators (St₁, ... Stₖ) to be identified by the same amounts, which have an effect on the web end only within the noise level of the cross-section;
c) means for carrying out an iterative section measurement in each measuring zone, the temporal mean value obtained at a) being subtracted from the measurement result, and
d) means for superimposing the results obtained at c) and for terminating the iteration when the second number (k) of measuring signals corresponding to the actuators (St₁, ... Stₖ) to be identified stands out clearly from the superimposed noise components of the cross-section in terms of amplitude and/or shape.

9. Device according to Claim 8, characterized by further means for evaluating the amplitudes of the measuring signals by comparison with a detection threshold which is a function of the number (i₂) of the superimpositions in accordance with the features c) and d) and the amplitude of the change in section effected by the actuator adjustments.

10. Device according to Claim 8, characterized by further means for evaluating the measuring signals using typical signal patterns by means of pattern recognition.

11. Device according to Claim 10, characterized by further means for carrying out the pattern recognition by using a hierarchically staged fuzzy logic controller (4-8), the input variables of the last stage being the amplitude (A), the shape (F) and the expected location (O) of the measuring signals, and the output variable being the reliability of detection (S) for the changes in section effected by the actuator adjustments, and the shape of the measuring signals being evaluated in higher-order stages which are fed, as input variables, the roughness (Ra) and the width (Br) of the measuring signals as well as the spacing and the depth, referred to the amplitude, of the right-hand and of the left-hand secondary maxima.

12. Device according to Claim 8 or one of the following Claims 9 to 11, characterized by further means for adjusting the actuators (St₁, ... Stₖ) by such an amount in each case that the change in section thereby effected corresponds to the standard deviation of the noisy cross-section.

13. Device according to Claim 8 or one of the following Claims 9 to 12, characterized by further means for adjusting actuators (St₁, ... Stₖ) distributed equidistantly over the entire width of the material web (1).

14. Device according to Claim 8 or one of the following Claims 9 to 13, characterized by further means for assigning the remaining actuators (St₁, ... Stₖ) to corresponding measuring zones at the web end by using an interpolation function which contains as support points the values of the number (k) of the identified actuators which has been determined.

## Revendications

1. Procédé d'identification d'actionneur lors d'une régulation du profil transversal d'une bande de matériau (1) produite en continu, notamment d'une bande de papier ou de matière plastique, plusieurs actionneurs (St₁ à Stₖ) et plusieurs zones de mesure (M₁ à Mₙ) étant prévues transversalement à la bande de matériau et la corrélation de l'action en un actionneur (St₁ à Stₖ) avec la variation de signaux de mesure étant détectée dans les zones de mesure (M₁ à Mₙ), caractérisé par les étapes suivantes :
a) alors que des grandeurs réglantes (St₁ à Stₖ) restent constantes, on détermine et on mémorise dans chaque zone de mesure (M₁ à Mₙ) à partir d'un premier nombre (i1) de mesures successives la valeur moyenne temporelle du profil à la fin de la bande,
b) on règle un deuxième nombre (k) déterminé d'actionneur à identifier (St₁ à Stₖ) d'une même valeur, qui agit à la fin de la bande, seulement à l'intérieur du niveau de bruit du profil transversal,
c) on effectue dans chaque zone de mesure une mesure de profil et on soustrait de chaque résultat la valeur moyenne temporelle obtenue à l'étape a),
d) on répète l'étape c) en superposant les résultats obtenus à chaque fois jusqu'à ce que le nombre (k) de signaux de mesure correspondant aux actionneurs à identifier (St₁ à Stₖ) se distingue nettement en amplitude et/ou en forme des composantes de bruit superposées du profil transversal.

2. Procédé selon la revendication 1, caractérise par le fait qu'on exploite les amplitudes des signaux de mesure en les comparant à un seuil de détection qui dépend du nombre (i₂) des superpositions et de l'amplitude de la variation de profil provoquée par les réglages des actionneurs.

3. Procédé selon la revendication 1, caractérisé par le fait qu'on exploite les signaux de mesure à l'aide de formes typiques de signaux au moyen d'une reconnaissance de forme.

4. Procédé selon la revendication 3, caractérisé par le fait qu'on effectue la reconnaissance de forme au moyen d'une unité de régulation hiérarchisée en logique floue (4 à 8), les variables d'entrée du dernier étage étant l'amplitude (A), la forme (F) et l'emplacement escompté (O) des signaux de mesure, la variable de sortie de ce dernier étage étant la fiabilité de reconnaissance (S) pour les variations de section provoquées par les réglages des actionneurs, la forme des signaux de mesure étant exploitée dans des étages précédents qui reçoivent comme variables d'entrée la rugosité (Ra) et la largeur (Br) des signaux de mesure ainsi que, respectivement, la distance et la profondeur, rapportée à l'amplitude, des minima secondaires droit et gauche.

5. Procédé selon l'une des revendications précédentes, caractérisé par le fait qu'on règle les actionneurs respectivement d'une valeur telle que la variation de profil ainsi provoquée correspond à l'écart-type du profil transversal bruitée.

6. Procédé selon l'une des revendications précédentes, caractérisé par le fait qu'on effectue un réglage d'actionneur à équidistants les uns des autres sur toute la largeur de la bande de matériau (1).

7. Procédé selon l'une des revendications précédentes, caractérisé par le fait qu'on effectue l'association des autres actionneurs à des zones de mesure correspondantes à la fin de la bande au moyen d'une fonction d'interpolation qui contient comme points de base les valeurs d'un certain nombre (k) d'actionneur identifiés.

8. Appareil pour l'identification d'actionneur lors de la régulation du profil transversal d'une bande de matériau (1) produite en continu, notamment d'une bande de papier ou de matière plastique, plusieurs actionneurs (St₁ à Stₖ) et plusieurs zones de mesure (M₁ à Mₙ) étant prévus transversalement à la bande de matériau et la corrélation de l'action en un actionneur (St₁ à Stₖ) avec la variation de signaux de mesure étant détectée dans les zones de mesure (M₁ à Mₙ), l'appareil étant constitué d'au moins un calculateur numérique programmable en mémoire (MC), ayant une unité centrale et des mémoires de travail, de programmes et de données ainsi qu'une interface d'entrée/sortie et étant programmé pour la mise en oeuvre du procédé selon la revendication 1, caractérisé par
a) des moyens pour déterminer et pour mémoriser une valeur moyenne temporelle du profil à la fin de la bande pour chaque zone de mesure à partir d'un premier nombre (i1) de mesures successives pour des grandeurs réglantes laissées constantes ;
b) des moyens pour régler un deuxième nombre (k) déterminé d'actionneur à identifier (St₁ à Stₖ) d'une même valeur, qui agit à la fin de la bande, seulement à l'intérieur du niveau de bruit du profil transversal ;
c) des moyens pour mettre en oeuvre une mesure itérative du profil dans chaque zone de mesure, la valeur moyenne temporelle obtenue en a) étant soustraite du résultat de mesure ;
d) des moyens pour superposer les résultats obtenus en c) et pour interrompre l'itération lorsque le deuxième nombre (k) de signaux de mesure correspondant aux actionneurs à identifier (St₁ à Stₖ) se distingue nettement en amplitude et/ou en forme des composantes de bruit superposées du profil transversal.

9. Appareil selon la revendication 8, caractérisé par d'autres moyens pour exploiter les amplitudes des signaux de mesure en les comparant à un seuil de détection, qui dépend du nombre (i₂) des superpositions selon les caractéristiques c) et d) et de l'amplitude de la variation du profil provoquée par les réglages des actionneurs.

10. Appareil selon la revendication 8, caractérisé par d'autres moyens pour exploiter des signaux de mesure à l'aide de formes de signaux typiques au moyen d'une reconnaissance de forme.

11. Appareil selon la revendication 10, caractérisé par d'autres moyens pour mettre en oeuvre la reconnaissance de forme en utilisant une unité de régulation hiérarchisée en logique floue (4 à 8), les variables d'entrée du dernier étage étant l'amplitude (A), la forme (F) et l'emplacement escompté (O) des signaux de mesure, la variable de sortie de ce dernier étage étant la fiabilité de reconnaissance (S) pour les variations de profil provoquées par les réglages des actionneurs, la fcrme des signaux de mesure étant exploitée dans des étages précédents qui reçoivent comme variables d'entrée la rugosité (Ra) et la largeur (Br) des signaux de mesure ainsi que, respectivement, la distance et la profondeur, rapportée à l'amplitude, des minima secondaires droit et gauche.

12. Appareil selon la revendication 8 ou selon l'une des revendications suivantes 9 à 11, caractérisé par d'autres moyens pour régler les actionneurs (St₁ à Stₖ) respectivement d'une valeur telle que la variaticn de profil ainsi provoquée correspond à l'écart-type du profil transversal bruitée.

13. Appareil selon la revendication 8 ou selon l'une des revendications suivantes 9 à 12, caractérisé par d'autres moyens pour régler des actionneurs (St₁ à Stₖ) équidistants les uns des autres sur toute la largeur de la bande de matériau (1).

14. Appareil selon la revendication 8 ou selon l'une des revendications suivantes 9 à 13, caractérisé par d'autres moyens pour associer les autres actionneurs (St₁ à Stₖ) à des zones de mesure correspondantes à la fin de la bande, en utilisant une fonction d'interpolation qui contient comme points de base les valeurs d'un nombre (k) déterminé d'acticnneurs identifiés.
